# EUROPÄISCHE PATENTSCHRIFT

(11) **EP 0 418 351 B1**
(45) Veröffentlichungstag und Bekanntmachung des Hinweises auf die Patenterteilung: **11.01.1995**
(21) Anmeldenummer: 90904785.4
(22) Anmeldetag: 03.04.1990
(51) Int. Cl.: H04M 1/02

(54) **FERNSPRECHAPPARAT**
TELEPHONE
APPAREIL TELEPHONIQUE

(30) Priorität: 05.04.1989 CH 1251/89
(43) Veröffentlichungstag der Anmeldung: 27.03.1991
(73) Patentinhaber: BÖCK, Josef, CH-9427 Wolfhalden (CH)
(72) Erfinder: BÖCK, Josef, CH-9427 Wolfhalden (CH)
(74) Vertreter: Groner, Manfred
(86) Internationale Anmeldenummer: CH9000088
(87) Internationale Veröffentlichungsnummer: WO9012468

(56) Entgegenhaltungen:
- WO-A-85/01913
- DE-C- 3 039 800
- US-A- 4 033 651
- US-A- 4 292 481
- US-A- 4 436 965

## Beschreibung

Die Erfindung betrifft einen Fernsprechapparat. Bei den allgemein bekannten Apparaten dieser Art ist das Telephon in ein geschlossenes Gehäuse eingebaut und wird als Hörkapsel gemeinsam mit einem Mikrophon in einen Handapparat eingesetzt.

Durch die DE-A-30 39 800 ist ein Fernsprechapparat bekannt geworden, bei dem eine Bedienungstastatur in einen Rahmen eingebaut und dieser in eine Oeffnung eines Gehäuses eingesetzt ist. Die Tasten sind von einer beschriftbaren Folie überdeckt, die mit einem federnden Drahtbügel im Rahmen gehalten ist. Die US-A-4,033,651 zeigt einen Fernsprechapparat, bei dem an einem Gehäuse eine Wählscheibe angebracht ist. Bei beiden Fernsprechapparaten sind die elektronischen Baugruppen in einem Gehäuse untergebracht.

Der Erfindung liegt die Aufgabe zugrunde, einen Fernsprechapparat zu schaffen, der in hoher Qualität kostengünstiger und schneller und auch in flacherer Bauweise als bisher hergestellt werden kann. Die Aufgabe wird durch die Erfindung gemäss Anspruch 1 gelöst.

Die Folienbauweise erlaubt es, den Fernsprechapparat sehr kompakt aus einer Mehrzahl miteinander verpressten Folien herzustellen. Die elektronischen Bauteilegruppen und die Tasten der Eingabetastatur können hermetisch durch Folien verschlossen werden, so dass kein eigentliches Gehäuse erforderlich ist. Eine Deckfolie kann frei gestaltet werden und beispielsweise auch geprägt werden, wobei auch Umrandungen und Vertiefungen möglich sind, damit der Bediener des Fernsprechapparates die Tasten sofort findet. Aenderungen der Deckfolie und der übrigen Folien sind leicht möglich, so dass mit wenig Aufwand die Gestaltung des Fernsprechapparates geändert und auch an spezielle Bedürfnisse angepasst werden kann. Ohne wesentliche Verteuerung der Herstellung können weitere Einrichtungen, beispielsweise ein Rechner oder eine Uhr, die ebenfalls über ein Tastenfeld der Deckfolie bedienbar sind, integriert werden. Die durch die Folienbauweise mögliche hermetische Versiegelung des gesamten elektronischen Bereichs erhöht die Betriebssicherheit und schützt die Bauteile vor schädlichen Umgebungseinflüssen, beispielsweise vor dem Eindringen von Wasser. Vorteilhafte Weiterbildungen ergeben sich aus den übrigen Ansprüchen. Ein Ausführungsbeispiel der Erfindung wird nachfolgend anhand der Zeichnungen näher erläutert. Es zeigen:
- Fig. 1: eine Draufsicht auf den erfindungsgemässen Fernsprechapparat,
- Fig. 2: eine Draufsicht nach Fig. 1, jedoch bei abgezogener Deckfolie,
- Fig. 3: schematisch den Aufbau einer Taste, und
- Fig. 4: eine perspektivische Ansicht eines erfindungsgemässen Fernsprechapparates.

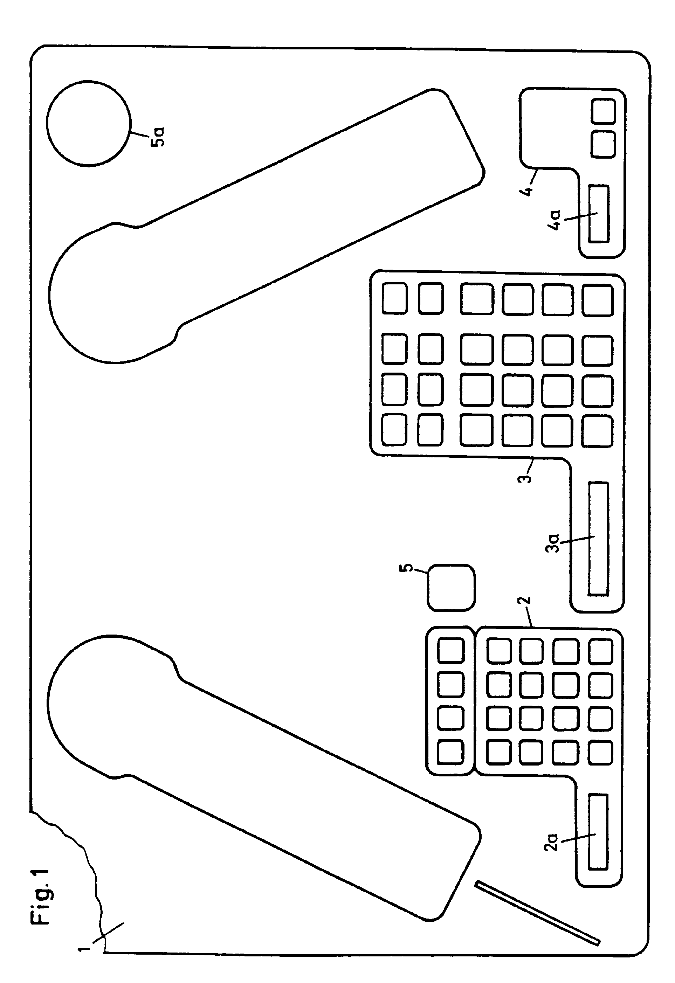

Eine Deckfolie 1 aus beispielsweise Polyester ist gemäss den Fig. 1 und 4 bedruckt. Ein Feld 2 bezeichnet die Eingabetastatur, auf welcher die zu wählende Telephonnummer durch Antippen einer Folientastatur eingegeben werden kann. Ein weiteres Feld 3 bezeichnet eine Eingabetastatur für einen Rechner, wobei diese Tastatur aus Membranschaltern aufgebaut ist. Schliesslich weist ein drittes Feld 4 auf Tasten für eine eingebaute Uhr hin. Neben den Tastenfeldern weist die Deckfolie jeweils einen durchsichtigen Bereich 2a, 3a und 4a auf, durch die jeweils ein Anzeigefeld, beispielsweise eine Flüssigkristallanzeige, sichtbar ist. Weiter sind auf der Deckfolie 1 ein Feld 5 für ein darunter angeordnetes Mikrophon und ein Feld 5a für einen Lautsprecher markiert.

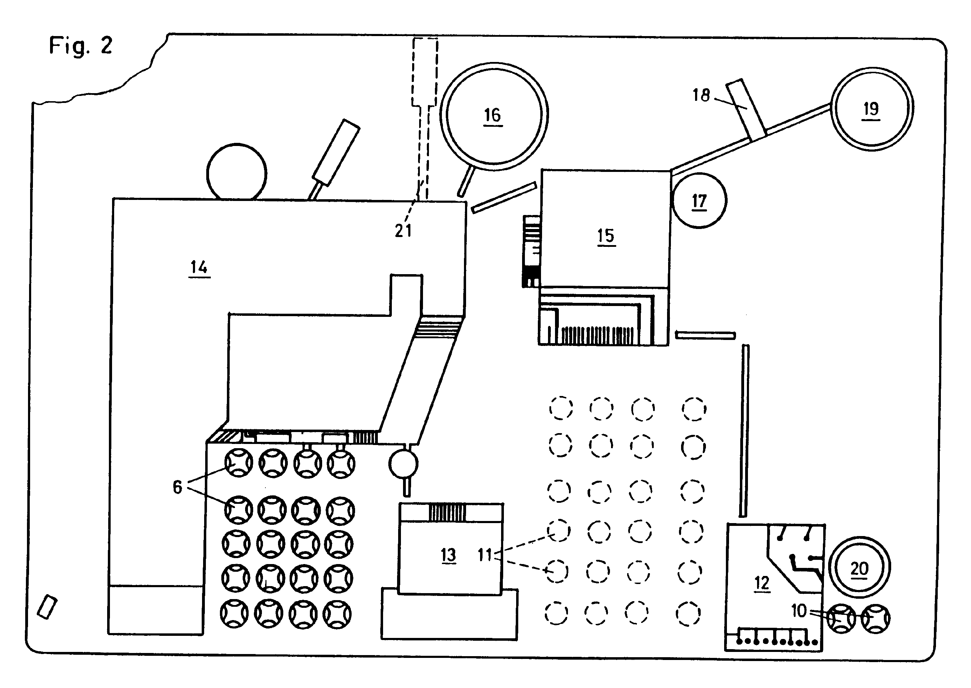

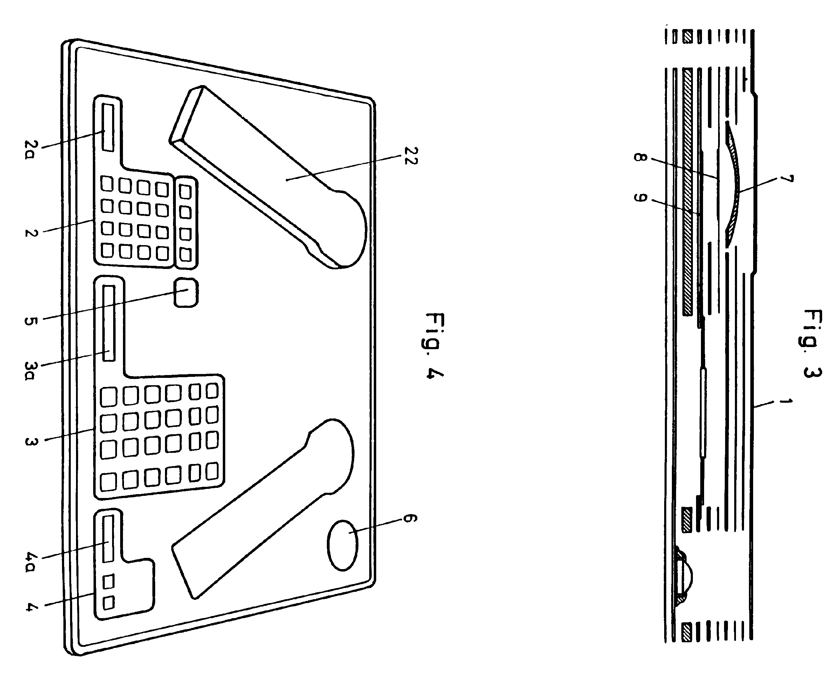

Wie die Fig. 2 zeigt, sind unter dem Feld 2 Tasten 6 angeordnet, die mit Fingerdruck durch die Deckfolie 1 hindurch betätigt werden. Der Aufbau einer Taste 6 ergibt sich aus Fig. 3. Beim einpressen einer Domprägung 7 werden zwei im Abstand zueinander angeordnete leitende Bereiche 8 und 9 in Kontakt gebracht. Die Eingabetastatur ist wie ersichtlich in eine gedruckte Schaltung integriert. Entsprechende Tasten 10 sind für die Bedienung der eingebauten Uhr vorgesehen. An sich bekannte Membrantasten 11 ermöglichen die Bedienung eines Rechners und zwar ebenfalls durch die Deckfolie 1 hindurch.

Wie die Fig. 3 zeigt, sind die Folien mit Ausstanzungen 12 bis 20 versehen, die auf der Vorderseite von der Deckfolie 1 abgedeckt sind und die ebenfalls auf der Rückseite von einer Grundfolie abgedeckt sind. In diese Ausstanzungen 12 bis 20 sind hier nicht gezeigte vorbereitete Bauteilegruppen und Bauteile eingesetzt und mit den Leiterplatten elektrisch verbunden. Die Herstellung dieser Bauteilegruppen ist dem Fachmann bekannt und wird hier deshalb nicht erläutert. Durch einen nach aussen führenden Durchgang 21 ist das hier nicht gezeigte Telephonkabel eingeführt. In dem in Fig. 4 gezeigten Gehäuse 22 können weitere Bedienungselemente untergebracht sein, die über ein hier nicht gezeigtes Kabel elektrisch mit den übrigen Bauteilen verbunden sind.

Der hier vorgesehene Rechner und die Uhr können selbstverständlich auch weggelassen oder durch andere Einrichtungen ersetzt werden.

Die mit leitenden Substraten direkt bedruckten dünnen Folien bilden die Grundlage der gesamten Schaltung beziehungsweise des elektronischen Gerätes. Die Eingabetastatur ist in die gedruckte Schaltung integriert. Auf diese Weise ist es möglich, den Fernsprechapparat in kompakter und hermetisch verschlossener Form herzustellen.

Die verpressten Folien bilden ein flaches Paket mit einer Stärke von beispielsweise um etwa 5 mm. Die Flachheit des erfindungsgemässen Fernsprechapparates ist ein wesentlicher Vorteil. Zudem erhöht die hermetische Versiegelung des gesamten elektronischen Bereichs die Betriebssicherheit und schützt die Bauteile vor schädlichen Umwelteinflüssen. Aufgrund der Folienbauweise kann auch das Gewicht niedrig gehalten werden.

Nachfolgend werden die für die Erfindung wesentlichen Verfahrensschritte erläutert:

Die Kunststoffolien aus Polyester werden mit leitenden Pasten in der Siebdrucktechnik bedruckt und in geeigneten Anlagen getrocknet. Ueber den leitenden Pasten wird im gleichen Verfahren eine isolierende Schicht aufgebracht. Dieser Aufbau wird wiederholt um eine Mehrlagenschaltung zu erhalten. Mehrere so bearbeitete Folien werden aufeinander laminiert. Maschinen mit Stanzformen versehen die Folien mit den nötigen Aussenkonturen oder Aussparungen in der Folie selbst. Es entstehen Hohlräume, die die verschiedenen Bauteile aufnehmen.

Die Eingabetastaturen bzw. Membranschalter werden nach dem gleichen Verfahren hergestellt. Ein Hohlraum hält die zwei Kontakte auf Distanz, damit erst ein Kontakt stattfindet, wenn der Benützer die entsprechende Taste drückt. Die Abdeckfolie kann frei gestaltet und auch geprägt werden. Umrandungen und Vertiefungen sind möglich, damit der Bediener das Tastfeld sofort findet. Um ein taktiles Feedback beim Eingeben der Daten zu bekommen, sind Domprägungen in die Folie integriert.

Zur Bestückung von Bauteilen werden Folien, die ähnlich aussehen wie Filmbänder (35 mm), flache Chips (Waverplättchen) in ihrer Grundform aufgeklebt. Die so vorbereiteten Bauteilegruppen werden an den vorgesehenen Hohlräumen in der Schaltungsgrundlage eingebaut. Die Verbindung mit den Eingabetastaturen und den Anzeigen erfolgt mit der direkt auf die Folien gedruckten Leitertechnik. In einer kontinuierlichen Rollenfertigung kann eine hohe Produktionsgeschwindigkeit erreicht werden. Zum Verpressen der Folien eignet sich insbesondere die Vorrichtung gemäss der EP-PS 0 160 056.

Die verpressten Leiterplatten, sogenannte Flexprints, sind die tragenden Elemente der elektronischen und elektrischen Bauteilen und an sich allgemein bekannt. Sie werden in Galvanotechnik (Aetztechnik) hergestellt. Die vorbereiteten Bauteilträger werden von Hand oder mit Robotern bestückt und mit verschiedenen Verbindungsverfahren befestigt bzw. kontaktiert. Ein hierfür besonders geeignetes Verfahren ist die SMD-Technik. Die Leiterplatten werden mit lötbaren Substraten partiell bedruckt, die Bauteile mit Bestückungsautomaten aufgebracht und anschliessend in einem Wärmeprozess endgültig befestigt. Die Bedienung erfolgt über eine Folientastatur. Ein- oder beidseitig mit leitenden Farben bedruckte Xunststoffolien werden mit Klebefolien zusammen laminiert. Sie können gestanzt und verformt werden.

All diese Komponenten werden elektrisch miteinander verbunden.

Wesentlich ist, dass beim erfindungsgemässen Fernsprechapparat die verschiedensten Verfahren und Herstellungstechniken zusammengebracht werden.

## Patentansprüche

1. Fernsprechapparat, dadurch gekennzeichnet, dass er plattenförmig ausgebildet und in Folienbauweise hergestellt ist und eine Mehrzahl flexibler, miteinander verpresster und verklebter Folien aufweist, wobei die unter einer Deckfolie (1) angeordneten Folien Ausnehmungen (12-20) aufweisen, die Hohlräume bilden, in welche Bauteile eingesetzt sind.

2. Fernsprechapparat, nach Anspruch 1, dadurch gekennzeichnet, dass flache Chips (Waverplättchen) in ihrer Grundform aufgeklebt sind und die so vorbereiteten Bauteilegruppen in vorgesehene Hohlräume in der Schaltungsgrundlage eingebaut sind.

3. Fernsprechapparat, nach Anspruch 1 oder 2, dadurch gekennzeichnet, dass eine Eingabetastatur (2) in eine gedruckte Schaltung integriert ist.

4. Fernsprechapparat, nach Anspruch 3, dadurch gekennzeichnet, dass die Verbindung der Eingabetastatur (2) mit einer Anzeige (2a) mit direkt auf die Folien gedruckten Leiterbahnen erfolgt.

5. Fernsprechapparat nach einem der Ansprüche 1 bis 4, dadurch gekennzeichnet, dass die Folien (1) mit Klebefolien laminiert sind und dass die Stärke der Platte kleiner als etwa 10 mm, vorzugsweise kleiner als 6 mm ist.

6. Fernsprechapparat nach einem der Ansprüche 1 bis 5, dadurch gekennzeichnet, dass er eine Deckfolie (1) aufweist, auf welcher Bedienungsfelder (2,3) aufgedruckt sind.

7. Fernsprechapparat nach Anspruch 5, dadurch gekennzeichnet, dass in die Platte ein Schallempfänger (5) und ein Schallgeber (5a), die jeweils aus Folien hergestellt sind, eingebaut sind.

8. Fernsprechapparat nach einem der Ansprüche 1 bis 7, dadurch gekennzeichnet, dass die Deckplatte (1) ein Tastenfeld (3) für einen elektronischen Rechner aufweist und der elektronische Rechner im Apparat integriert ist.

## Claims

1. Telephone that is formed as a board and manufactured in laminate construction, exhibiting multiple flexible plastic films compressed with one another, whereby plastic films arranged beneath a plastic film cover (1) possess recesses (12-20) into which components are inserted.

2. Telephone, especially according to claim 1, whereby flat chips (waver chips) in their basic form are glued onto the film and whereby component assemblies thus prepared are integrated into hollow spaces in the basic printed board.

3. Telephone, especially according to any one of claims 1 or 2, whereby a keyboard (2) is integrated into a printed board.

4. Telephone according to claim 3, whereby the keyboard (2) is connected to a display (2a) via conduction paths printed directly onto the plastic films.

5. Telephone according to any one of claims 1 through 4 that the plastic films are laminated with adhesive films, and whereby the board is less than approximately 10 mm thick, preferably less than 6 mm.

6. Telephone according to any one of claims 1 through 5, whereby it exhibits a plastic film cover (1) onto which are printed operating fields (2,3).

7. Telephone according to claim 5, whereby an acoustic receiver (5) as well as an acoustic emitter (5a), each of which are manufactured from plastic films, are integrated into the board.

8. Telephone according to any one of claims 1 through 7, whereby the plastic film cover (1) exhibits a keyboard (3) for an electronic calculator, and whereby the electronic calculator is integrated into the unit.

## Revendications

1. Poste téléphonique, caractérisé en ce qu'il est réalisé sous la forme d'une plaquette et est fabriqué sous la forme d'une structure formée de feuilles et comporte une multiplicité de feuilles flexibles, comprimées entre elles et collées, les feuilles situées au-dessous d'une feuille de revêtement (1) comportant des évidements (12-20) qui forment des cavités, dans lesquelles sont insérés des composants.

2. Poste téléphonique, notamment selon la revendication 1, caractérisé en ce que des plaquettes plates (plaquettes waver) sont collées dans leur forme de base, et les modules ainsi préparés sont insérés dans des cavités prévues dans la couche de base du circuit.

3. Poste téléphonique suivant la revendication 1 ou 2, caractérisé en ce qu'un clavier d'entrée (2) est intégré dans un circuit imprimé.

4. Poste téléphonique selon la revendication 3, caractérisé en ce que la liaison du clavier d'entrée (2) à un dispositif d'affichage (2a) est réalisée avec des voies conductrices imprimées directement sur les feuilles.

5. Poste téléphonique selon l'une des revendications 1 à 4, caractérisé en ce que les feuilles (1) sont superposées moyennant l'interposition de feuilles adhésives et que l'épaisseur de la plaque est inférieure à environ 10 mm et de préférence inférieure à 6 mm.

6. Poste téléphonique selon l'une des revendications 1 à 5, caractérisé en ce qu'il possède une feuille de revêtement (1) sur laquelle sont imprimées des zones de commande (2,3).

7. Poste téléphonique selon la revendication 5, caractérisé en ce qu'un récepteur acoustique (5) et un générateur acoustique (5a), qui sont constitués respectivement par des feuilles, sont montés dans la plaque.

8. Poste téléphonique selon l'une des revendications 1 à 7, caractérisé en ce que la plaque de revêtement (1) possède un panneau de touches (3) pour un calculateur électronique et que le calculateur électronique est intégré dans le poste.
